# EUROPÄISCHE PATENTANMELDUNG

(11) **EP 0 985 589 A1**
(43) Veröffentlichungstag der Anmeldung: **15.03.2000**
(21) Anmeldenummer: 99117752.8
(22) Anmeldetag: 09.09.1999
(51) Int. Cl.: B62B 5/06, B62B 7/06

(54) **Schiebegriff für Rollstühle, Kinderkarren oder ähnliche Fahrzeuge**

(30) Priorität: 11.09.1998 DE 29816359 U
(71) Anmelder: Sopur Medizintechnik GmbH, 69254 Malsch (DE)
(72) Erfinder: Burckhardt, Ralph, 69115 Heidelberg (DE); Lüll, Holger, 69207 Sandhausen (DE)
(74) Vertreter: Geitz, Heinrich, Dr.-Ing.

(57) **Zusammenfassung**

Der für Rollstühle, Kinderkarren oder ähnliche Fahrzeuge bestimmte Schiebegriff ist mit einem hinteren Rahmenrohr des jeweiligen Fahrzeugs verbindbar und weist ein Griffstück sowie eine Griffhalterung auf.

Das Griffstück (17) ist an der Griffhalterung (12) gelenkig angelenkt und zwischen einer an letztere angeklappten Nichtgebrauchsstellung und einer vom Griffstück (17) abstehenden Schiebestellung verschwenkbar sowie in beiden Betriebsstellungen verrastbar.

## Beschreibung

Die Erfindung bezieht sich auf einen Schiebegriff für Rollstühle, Kinderkarren oder ähnliche Fahrzeuge, der mit einem hinteren Rahmenrohr des jeweiligen Fahrzeugrahmens verbindbar ist und ein Griffstück und eine Griffhalterung aufweist.

Insbesondere Rollstühle sind in aller Regel mit zwei seitlich voneinander beabstandeten Schiebegriffen ausgerüstet, die an aufwärts gerichteten hinteren Rahmenrohren des Fahrwerkrahmens angeordnet sind. Häufig handelt es sich bei derartigen Schiebegriffen einfach um nach rückwärts abgebogene Endabschnitte der genannten Rahmenrohre. Bekannt sind aber auch über jeweils eine Steckkupplung oder sonstige Verbindungsmittel mit den oberen Enden der genannten Rahmenrohre lösbar verbundene Schiebegriffe, die aus einer mit dem jeweiligen Rahmenrohr verbindbaren Griffhalterung und einem an dieser befestigten, etwa aufgesteckten Griffstück bestehen.

Durch die Erfindung soll ein Schiebegriff, der insbesondere für Rollstühle bestimmt, aber auf diese Verwendung keineswegs beschränkt ist, dadurch verbessert werden, daß das Griffstück an der Griffhalterung gelenkig angelenkt und zwischen einer an letztere angeklappten Nichtgebrauchsstellung und einer vom Griffstück abstehenden Schiebestellung verschwenkbar sowie in beiden Betriebsstellungen verrastbar ist.

Im Unterschied zu bekannten Schiebegriffen dieser Art, bei denen die Griffhalterun und das Griffstück starr miteinander verbunden sind, ist bei dem erfindungsgemäßen Schiebegriff je nach Bedarf das Griffstück für Schiebebetrieb in eine von der Griffhalterung abstehende Betriebsstellung und für normalen Fahrbetrieb in eine abgeklappte Nichtgebrauchsstellung verschwenkbar.

Eine Weiterbildung der Erfindung sieht vor, daß eine Verrastungskontur eines Verrastungselements mit Verrastungskonturen des Griffstücks in dessen beiden Betriebsstellungen derart zusammenwirkt, daß das Griffstück in der Stellung für Schiebebetrieb mit definierter Kraft gehalten wird und gegen die Wirkung der das formschlüssige Zusammenwirken der Verrastungskonturen vermittelnden Federkraft aus seiner Verriegelungslage derart entriegelbar ist, daß ein Verschwenken des Griffstücks aus der Schiebestellung in die Nichtgebrauchsstellung möglich wird, wobei in der Nichtgebrauchsstellung wiederum eine Verrastung des Griffstücks erfolgt.

Zweckmäßigerweise kann die Verrastungskontur des Verrastungselements als Rastnocken ausgebildet sein, der in der einen Betriebsstellung des Griffstücks in eine Rastausnehmung von diesem eingreift und in der anderen Betriebsstellung eine Rastnase des Griffstücks hintergreift.

Nach einer anderen wichtigen Weiterbildung der Erfindung dient als Verrastungselement eine um eine zur Anlenkachse des Griffstücks parallele Achse verschwenkbar an der Griffhalterung angelenkte Sperrklinke, die einen Rastnocken besitzt, der mit den Verrastungskonturen des Griffstücks in dessen beiden Betriebsstellungen zusammenwirkt und in der jeweiligen Betriebsstellung eine Verriegelung des Griffstücks vermittelt, gegen die Wirkung der genannten Federkraft jedoch aus der jeweiligen Verriegelungslage ausrückbar ist mit der Folge, daß dann eine Verschwenkung des Griffstücks aus der einen Betriebsstellung in die andere Betriebsstellung möglich ist.

Vornehmlich kann es sich bei der Sperrklinke um ein Formteil aus Kunststoff handeln, an das eine den Rastnocken in Eingriff mit den Verrastungskonturen des Griffstücks drückende Federzunge einstückig angeformt ist, und zwar zweckmäßigerweise auf der vom Rastnocken der Sperrklinke abgewandten Seite der Sperrklinken-Anlenkachse derart, daß die Federzunge zwischen der Griffhalterung und der Sperrklinke verspannt ist.

Im Interesse einer besonders einfachen Montage ist bei dem Schiebegriff nach der Erfindung die Griffhalterung mit einem als Muffe zum Aufstecken auf ein aufwärts gerichtetes Rahmenrohr ausgebildeten Verbindungsabschnitt ausgerüstet.

Weiter hat sich als zweckmäßig erwiesen, das Griffstück und/oder die Griffhalterung als Formteil bzw. Formteile aus Kunststoff auszubilden.

Eine Ausführungsform der Erfindung soll nachstehend anhand der beigefügten Zeichnungen beschrieben werden. In schematischen Ansichten zeigen:
- Fig. 1: in einer perspektivischen Ansicht den Schiebegriff mit einer auf einem aufwärts gerichteten hinteren Rahmenrohr eines Rollstuhls aufgenommenen Griffhalterung und einem an letztere angelenkten Griffstück in der Schiebestellung,
- Fig. 2: den Schiebegriff in einer Ansicht wie in Fig. 1, jedoch mit dem Griffstück in einer an die Griffhalterung angeklappten Nichtgebrauchsstellung,
- Fig. 3: eine Schnittansicht des Schiebegriffs mit dem Griffstück in der Fig. 1 entsprechenden Schiebestellung,
- Fig. 4: den Schiebegriff in einer Ansicht wie in Fig. 3, jedoch mit dem entriegelten Griffstück zu Beginn des Abklappens aus der Schiebestellung,
- Fig. 5: ebenfalls in einer Ansicht wie Fig. 3 den Schiebegriff mit gegenüber Fig. 4 weiter in Richtung der Nichtgebrauchsstellung abgeklappten Griffstück und
- Fig. 6: eine den Fig. 3 bis 5 entsprechende Schnittansicht des Schiebegriffs, jedoch mit dem Griffstück in der Nichtgebrauchsstellung wie in Fig. 2.

Bei dem in der Zeichnung veranschaulichten Schiebegriff 10 handelt es sich um einen Rollstuhl-Schiebegriff, der auf einem aufsteigenden hinteren Rahmenrohr 11 eines seitlichen Rahmenteils eines im übrigen nicht dargestellten Rollstuhls aufgenommen ist. Der Schiebegriff 10 besitzt eine Griffhalterung 12, die mit einem Muffenteil 13 auf das obere Ende des genannten Rahmenrohrs 11 aufgesteckt und auf diesem befestigt ist, was im einzelnen hier nicht weiter interessiert.

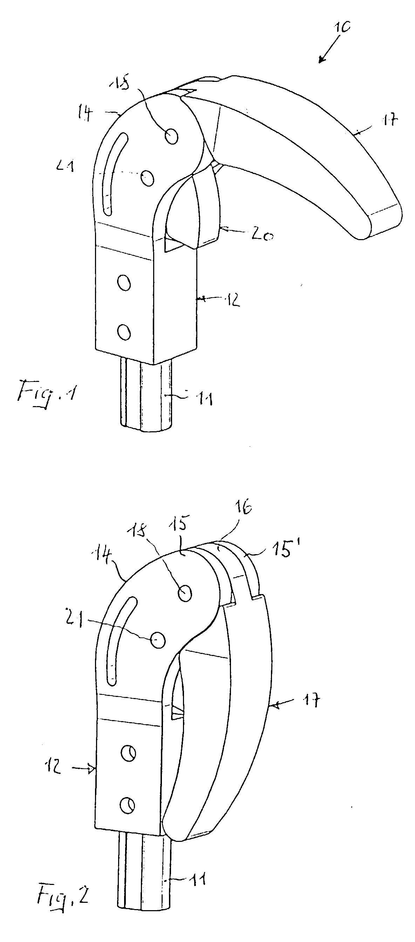

Die Griffhalterung 12 erstreckt sich mit einem Lagerabschnitt 14 von dem Muffenteil 13 fort und ist leicht nach rückwärts, entgegen der Fahrtrichtung des Rollstuhls, abgebogen. Der Lagerabschnitt 14 besitzt an seinem vom Muffenteil 13 der Griffhalterung 12 abgewandten Ende zwei gabelförmig ausgebildete Lageraugen 15, 15', zwischen denen ein Lagerabschnitt 16 eines Griffstücks 17 aufgenommen ist. Das Griffstück 17 ist mittels einer den genannten Lagerabschnitt 16 und die Lageraugen 15, 15' der Griffhalterung 12 durchdringenden Anlenkachse 18 zwischen einer Schiebestellung gemäß Fig. 1 und einer in Fig. 2 gezeigten Nichtgebrauchsstellung verschwenkbar an der Griffhalterung 12 angelenkt und in seinen beiden Betriebsstellungen jeweils lösbar verrastbar.

Die Arretierung des Griffstücks 17 vermitteln zusammenwirkende Verrastungskonturen einer Sperrklinke 20 und des Griffstücks 17. Die Sperrklinke 20 ist auf der Seite der Griffhalterung 12, nach der sich das Griffstück 17 von der Griffhalterung 12 forterstreckt, um eine zur Anlenkachse 18 des Griffstücks 17 parallele Anlenkachse 21 verschwenkbar angelenkt und besitzt einen zum Griffstück 17 hin vorstehenden Rastnocken 22, der bei in der Schiebestellung stehendem Griffstück 17 in eine unterseitige Rastausnehmung 23 des Griffstücks 17 eingreift und in dieser Eingriffslage durch Federkraft gehalten wird. Die Federkraft wird auf die Sperrklinke 20 mittels einer einstückig an letztere angeformten Federzunge 24 aufgebracht, die zwischen der Sperrklinke 20 und dem sich nach oben vom Muffenteil 13 forterstreckenden Abschnitt der Griffhalterung 12 eingespannt ist.

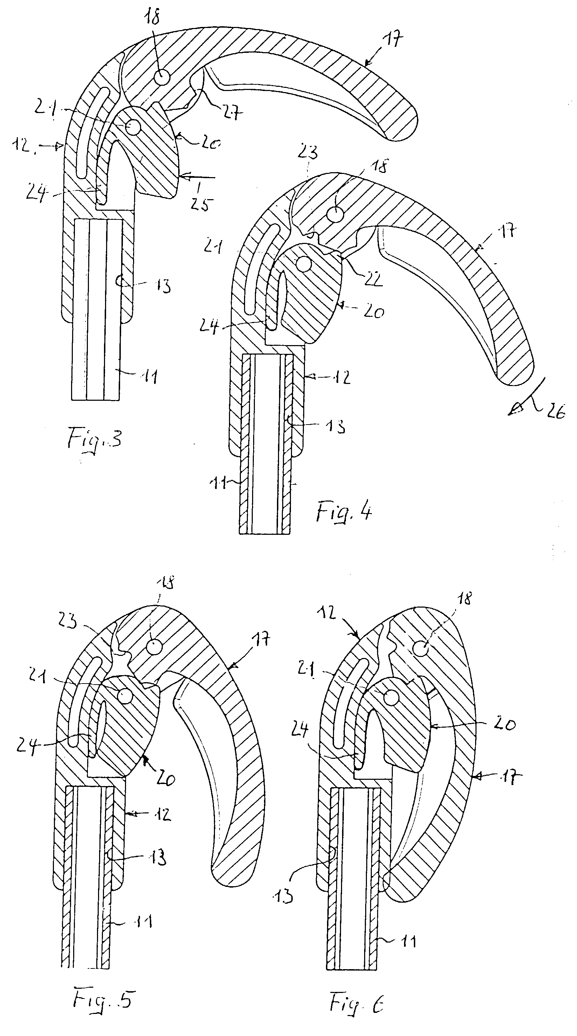

Wenn das Griffstück 17 in der aus den Fig. 1 und 3 ersichtlichen Schiebestellung in seine Nichtgebrauchsstellung verschwenkt werden soll, muß zuvor der Rastnocken 22 der Sperrklinke 20 außer Eingriff mit der Rastausnehmung 23 des Griffstücks 17 gebracht werden. Dies geschieht durch Aufbringung einer Druckkraft gemäß Pfeil 25 in Fig. 3, wodurch die Sperrklinke 20 um ihre Anlenkachse 21 im Uhrzeigersinn gegen die rückstellenden Federkräfte der Federzunge 24 verschwenkt. Nach dem Ausrücken des Rastnockens 22 aus der Rastausnehmung 23 des Griffstücks 17 kann letzteres in Richtung des Drehpfeils 26 in Fig. 4 um dessen Anlenkachse 18 gegenüber der Griffhalterung 12 verschwenkt werden, wobei über die in Fig. 5 gezeigte Zwischenstellung in der abgeklappten Nichtgebrauchsstellung gemäß Fig. 6 eine an das Griffstück 17 angeformte Rastnase 27 in eine vom Rastnocken 22 der Sperrklinke 20 hintergriffene Arretierungslage gelangt, in der die Sperrklinke 20 wiederum infolge Federkraftbeaufschlagung durch die angeformte Federzunge 24 kraftschlüssig gehalten ist.

Ein Verschwenken des Griffstücks 17 aus der Nichtgebrauchsstellung gemäß Fig. 6 in die Schiebestellung nach Fig. 3 gelingt in einfacher Weise, indem das Griffstück 17 aus der abgeklappten Nichtgebrauchsstellung um seine Anlenkachse 18 hochgeschwenkt wird, wobei die von dem Rastnocken 22 der Sperrklinke 20 hintergriffene Rastnase 27 des Griffstücks 17 die Sperrklinke 20 im Uhrzeigersinn verschwenkt und beim Erreichen der Schiebestellung der Rastnocken 22 der Sperrklinke 20 erneut in die unterseitige Rastausnehmung 23 des Griffstücks 17 formschlüssig einrastet.

Durch die Erfindung ist somit ein Schiebegriff 10 der eingangs genannten Art und Zweckbestimmung geschaffen worden, dessen Griffstück 17 wahlweise zwischen einer abgeklappten Nichtgebrauchsstellung und einer von der Griffhalterung 12 abstehenden Schiebestellung verschwenkbar ist.

## Patentansprüche

1. Schiebegriff für Rollstühle, Kinderkarren oder ähnliche Fahrzeuge, der mit einem hinteren Rahmenrohr des jeweiligen Fahrzeugs verbindbar ist und ein Griffstück sowie eine Griffhalterung aufweist,
dadurch gekennzeichnet,
daß das Griffstück (17) an der Griffhalterung (12) gelenkig angelenkt und zwischen einer an letztere angeklappten Nichtgebrauchsstellung und einer vom Griffstück (17) abstehenden Schiebestellung verschwenkbar sowie in beiden Betriebsstellungen verrastbar ist.

2. Schiebegriff nach Anspruch 1, dadurch gekennzeichnet, daß eine Verrastungskontur (22) eines Verrastungselements (20) mit Verrastungskonturen (23, 27) des Griffstücks (17) in dessen beiden Betriebsstellungen unter Federkraft formschlüssig zusammenwirkt.

3. Schiebegriff nach Anspruch 2, dadurch gekennzeichnet, daß die Verrastungskontur des Verrastungselements (20) als Rastnocken (22) ausgebildet ist, der in der einen Betriebsstellung des Griffstücks (17) in eine Rastausnehmung (23) des Griffstücks (17) eingreift und in dessen anderer Betriebsstellung eine Rastnase (27) des Griffstücks (17) hintergreift.

4. Schiebegriff nach Anspruch 2 oder 3, dadurch gekennzeichnet, daß als Verrastungselement eine um eine zur Anlenkachse (18) des Griffstücks (17) parallele Achse (21) schwenkbar an der Griffhalterung (12) angelenkte Sperrklinke (20) mit einem Rastnocken (22) dient, der mit den Verrastungskonturen (23, 27) des Griffstücks (17) in dessen beiden Betriebsstellungen unter Federkraft formschlüssig zusammenwirkt.

5. Schiebegriff nach Anspruch 4, dadurch gekennzeichnet, daß es sich bei der Sperrklinke (20) um ein Formteil aus Kunststoff handelt, an das eine den Rastnocken (22) in Eingriff mit den Verrastungskonturen (23, 27) des Griffstücks (17) drückende Federzunge (24) einstückig angeformt ist.

6. Schiebegriff nach Anspruch 5, dadurch gekennzeichnet, daß die Federzunge (24) auf der vom Rastnocken (23) der Sperrklinke (20) abgewandten Seite der Sperrklinken-Anlenkachse (21) angeformt und zwischen einem Abschnitt der Griffhalterung (12) und der Sperrklinke (20) verspannt ist.

7. Schiebegriff nach einem der Ansprüche 1 bis 6, dadurch gekennzeichnet, daß die Griffhalterung (12) einen als Muffe (13) zum Aufstecken auf ein aufwärts gerichtetes Rahmenrohr (11) ausgebildeten Verbindungsabschnitt aufweist.

8. Schiebegriff nach einem der Ansprüche 1 bis 7, dadurch gekennzeichnet, daß die Griffhalterung (12) und/oder das Griffstück (17) als Formteil/Formteile aus Kunststoff ausgebildet ist/sind.
